# EUROPÄISCHE PATENTSCHRIFT

(11) **EP 4 017 751 B1**
(45) Veröffentlichungstag und Bekanntmachung des Hinweises auf die Patenterteilung: **29.05.2024**
(21) Anmeldenummer: 20750609.8
(22) Anmeldetag: 23.07.2020
(51) Int. Cl.: B60K 35/00, B60K 35/10, B60K 35/25

(54) **BEDIENEINHEIT FÜR EIN FAHRZEUG UND FAHRZEUG**
OPERATOR CONTROL UNIT FOR A VEHICLE, AND VEHICLE
UNITÉ DE COMMANDE D'OPÉRATEUR POUR UN VÉHICULE ET VÉHICULE

(30) Priorität: 19.08.2019 DE 102019212380
(43) Veröffentlichungstag der Anmeldung: 29.06.2022
(73) Patentinhaber: Continental Automotive Technologies GmbH, 30175 Hannover (DE)
(72) Erfinder: BRÜNINGHAUS, Andreas, 60488 Frankfurt am Main (DE); BEILKER, Dirk, 60488 Frankfurt am Main (DE); SCHUMACHER, Sven, 60488 Frankfurt am Main (DE)
(74) Vertreter: Continental Corporation
(86) Internationale Anmeldenummer: PCT/EP2020/070797
(87) Internationale Veröffentlichungsnummer: WO 2021/032403

(56) Entgegenhaltungen:
- DE-A1-102014 019 006
- DE-B3-102017 212 011
- US-A1- 2015 309 576
- US-A1- 2018 339 592

## Beschreibung

Die Erfindung betrifft eine Bedieneinheit für ein Fahrzeug mit einem Gehäuse und einem Bedienelement, wobei das Gehäuse zur Aufnahme des Bedienelements ausgebildet ist,
und mit einer Frontabdeckung, welche zumindest teilweise ein transparentes berührungsempfindliches Bedienfeld zur Bedienung des Bedienelements aufweist, wobei die Frontabdeckung eine zum Gehäuse weisende Rückseite aufweist und wobei die Frontabdeckung elastisch im Gehäuse gelagert ist,
und mit zumindest einem Aktuator, wobei der zumindest eine Aktuator an der Rückseite der Frontabdeckung mittels einer Klebeschicht elastisch befestigt ist. Ferner betrifft die Erfindung ein Fahrzeug mit einer solchen Bedieneinheit.

Displays im Fahrzeug werden häufig mit aktiven haptischen Feedbacks ausgerüstet. Um solche Feedbacks zu erzeugen werden ein oder mehrere Aktuatoren benötigt, die eine gewollte Schwingung oder einen gewollten Kraftimpuls von außen an die Bedieneinheit beispielsweise ein Display übertragen. Dazu werden Aktuatoren außen an das Display montiert oder mit diesem verbunden. Für die entsprechende Hardware wird Bauraum benötigt.

Die DE 2018 0024 U1 offenbart eine Berührungssteuerung mit haptischer Rücckopplung zur Eingabe von Signalen in einen Computer und zur Ausgabe von Kräften an einen Benutzer der Berührungssteuerung, wobei die Berührungssteuerung aufweist: ein Berührungseingabegerät, das eine annähernd ebene Berührungsoberfläche aufweist, die betrieben wird, um aufgrund einer Position auf der Berührungsoberfläche, die der Benutzer berührt, ein Positionssignal in einen Prozessor des Computers einzugeben, wobei das Positionssignal die Position in zwei Dimensionen wiedergibt, mindestens einen mit dem Berührungseingabegerät verbundenen Aktor, wobei der Aktor eine Kraft auf das Berührungseingabegerät ausgibt, um dem die Berührungsoberfläche berührenden Benutzer eine haptische Empfindung zu liefern, wobei der Aktor die Kraft aufgrund einer von dem Prozessor ausgegebenen Kraftinformation ausgibt, wobei der Aktor eine Kraft direkt auf das Berührungseingabegerät ausgibt.

Die WO 2019 011906 A1 offenbart eine Bedieneinheit für ein Gerät mit einem Bedienelement, das eine berührungsempfindliche Bedienoberfläche aufweist. Das Bedienelement ist zur automatischen Rückführung nach einer Auslenkung aus seiner Ruhelage zurück in diese elastisch gelagert. Die mechanische Anregung des Bedienelements aus dessen Ruhelage zwecks taktiler Rückmeldung einer Betätigung des Bedienelements erfolgt mittels eines Aktuators. Ein Sensor erkennt die Bewegung des Bedienelements und/oder einer auf das Bedienelement wirkenden Beschleunigung und/oder Kraft. Die Auswerte- und Ansteuereinheit steuert bei Erkennung einer Bewegung des Bedienelements und/oder einer auf das Bedienelement wirkenden Beschleunigung und/oder Kraft ohne Sensierung einer Berührung der Bedienoberfläche den Aktuator zur Beibehaltung der Ruhelage des Bedienelements und/oder zur Zurückbewegung des Bedienelements in dessen Ruhelage und/oder zur Stabilisierung des Bedienelements an.

Die US 2015/309576 A1 offenbart eine taktile Steuerschnittstelle, bei der über mindestens drei Kraftsensoren, auf denen eine starre Platte der Steuerschnittstelle befestigt ist, ein auf einer Außenfläche der Platte ausgeübter Druck durch einen Finger eines Benutzers lokalisiert werden kann und dass mindestens einer der Kraftsensoren dazu konfiguriert sein kann, um eine haptische Rückmeldung an den Benutzer zu übermitteln. Die Kraftsensoren werden anhand Halterungen an der starre Platte befestigt.

Die DE 102017212011 B3 offenbart eine Anzeigevorrichtung zur Wiedergabe von Informationen auf einem Display angegeben, aufweisend mindestens ein Displaymodul und mindestens ein Deckglas, wobei zwischen dem Displaymodul und dem Deckglas eine mechanische Isolierung angeordnet ist, und mindestens einen Aktuator, der fest an dem Deckglas befestigt ist und ausgebildet ist, um eine Bewegung des Displays anzuregen.

Es ist eine Aufgabe der Erfindung, ein verbessertes Konzept für eine Bedieneinheit mit aktivem haptischem Feedback zu schaffen, wobei der Platzbedarf für den Aktuator möglichst gering sein soll.

Diese Aufgabe wird durch eine Bedieneinheit mit den Merkmalen des Anspruchs 1 und ein Fahrzeug mit den Merkmalen des Anspruchs 15 gelöst.

In den Unteransprüchen sind weitere vorteilhafte Maßnahmen aufgelistet, die beliebig geeignet miteinander kombiniert werden können, um weitere Vorteile zu erzielen.

Die Aufgabe wird gelöst durch eine Bedieneinheit für ein Fahrzeug mit einem Gehäuse und einem Bedienelement, wobei das Gehäuse zur Aufnahme des Bedienelements ausgebildet ist, und mit einer Frontabdeckung, welche zumindest teilweise ein transparentes berührungsempfindliches Bedienfeld zur Bedienung des Bedienelements aufweist, wobei die Frontabdeckung eine zur Gehäuse weisende Rückseite aufweist und wobei die Frontabdeckung elastisch im Gehäuse gelagert ist
und mit zumindest einem Aktuator, wobei
der zumindest eine Aktuator an der Rückseite der Frontabdeckung zur Erzeugung einer haptischen Anregung der Frontabdeckung angeordnet und mittels einer Klebeschicht elastisch befestigt ist.

Eine Frontabdeckung kann beispielsweise ein Coverglas, beispielsweise eines Displays oder ein Touchscreen sein.

Aktuatoren, auch Aktoren genannt sind antriebstechnische Baueinheiten, die ein elektrisches Signal, welches beispielsweise in einem Steuerungscomputer als Befehl ausgegeben wird, in mechanische Bewegungen umsetzen. Erfindungsgemäß wurde erkannt, dass je geringer das für die haptische Rücckopplung vorgesehene Bauelement ist, desto weniger Masse d.h. Gewicht bewegt werden muss.

Mittels der Erfindung wird für eine haptische Rückkopplung an den Benutzer lediglich die Frontabdeckung bzw. das Bedienfeld haptisch angeregt.

Durch die Anregung lediglich der Frontabdeckung wird an anzuregender Masse eingespart. Dadurch können die Aktuatoren wesentlich kleiner und mit weniger Leistung ausgeführt werden. Die Anregung geringerer Masse hat den Vorteil, dass geringere Leistungen von Aktuatoren benötigt werden. Dies spart zusätzlich Bauraum und Kosten ein. Dadurch ist eine geringere Kraftübertragung an die Frontabdeckung für eine haptische Rückkopplung möglich. Dadurch ergibt sich ebenfalls eine geringere Eigenakustik, welche beispielsweise vom Benutzer als leiser empfunden wird.

Durch die Erfindung wird zusätzlicher Bauraum für Aktuatoren vermieden.

Ferner wird vermieden, dass die gesamte Bedieneinheit beispielsweise inklusive eines Beleuchtungsmoduls haptisch angeregt werden muss.

Vorzugsweise ist der zumindest eine Aktuator außerhalb des transparenten berührungsempfindlichen Bedienfeldes an der Rückseite der Frontabdeckung angeordnet. Durch diese Anordnung wirkt der zumindest eine Aktuator nicht störend im transparenten Bedienfeld.

Weiterhin vorzugsweise sind mehrere Aktuatoren außerhalb des transparenten berührungsempfindlichen Bedienfeldes an der Rückseite der Frontabdeckung angeordnet. Dadurch kann eine gleichmäßige homogene haptische Rückkopplung erzielt werden.

In weiterer bevorzugter Ausgestaltung weist die Frontabdeckung zumindest vier Umfangsseiten auf. Vorzugsweise sind zumindest vier Aktuatoren vorgesehen, welche außerhalb des transparenten berührungsempfindlichen Bedienfeldes an der Rückseite der Frontabdeckung an jeder Umfangsseite angeordnet sind. Dadurch kann eine gleichmäßige Anregung der Frontabdeckung mit möglichst wenig Aktuatoren erzielt werden.

Vorzugsweise ist der zumindest eine Aktuator unmittelbar an der Rückseite der Frontabdeckung angeordnet. Dadurch kann die durch den zumindest einen Aktuator erzeugte mechanische Bewegung direkt an die Frontabdeckung gebracht werden.

In weiterer bevorzugter Ausgestaltung ist der zumindest eine Aktuator mittelbar an der Rückseite der Frontabdeckung angeordnet. Vorzugsweise ist ein Abstandshalter vorgesehen, welcher an der Rückseite der Frontabdeckung angeordnet ist, wobei der zumindest eine Aktuator an dem Abstandshalter angeordnet ist. Die vom Aktuator erzeugten mechanischen Schwingungen können durch den Abstandshalter gezielt verändert werden. Dadurch kann die Frequenz mit der die Frontabdeckung oder das Bedienfeld vibriert, gesteuert / beeinflusst werden.

Vorzugsweise weist der Abstandshalter eine Abstandshalterbreite und eine Abstandshalterlänge und der zumindest eine Aktuator eine Aktuatorlänge und eine Aktuatorbreite auf, wobei die Abstandshalterbreite kleiner als die Aktuatorbreite und/oder die Abstandshalterlänge kleiner als die Aktuatorlänge ausgebildet ist. Vorzugsweise ist die Abstandshalterbreite kleiner als die Aktuatorbreite und die Abstandshalterlänge kleiner als die Aktuatorlänge.

Somit weisen die oder der Abstandshalter eine geringere Größe als der oder die Aktuatoren auf. Durch diese Abstandshalter können die durch den Aktuator erzeugten Schwingungen fokussiert in die Frontabdeckung eingebracht werden.

Weiterhin vorzugsweise ist der zumindest eine Aktuator an dem Abstandshalter und der Abstandshalter an der Frontabdeckung mittels einer Klebeschicht geklebt. Dadurch ist eine einfache und elastische Befestigung sowohl der oder des Abstandshalters und der oder des Aktuators möglich.

Vorzugsweise ist ein Sensor zur Erkennung einer Bedienung des Bedienfeldes vorgesehen. Ferner ist der zumindest eine Aktuator zur mechanischen Anregung der Frontabdeckung bei Erkennung einer Bedienung durch den Sensor ausgestaltet. Der zumindest eine Sensor kann dabei als Kraft- oder Wegsensor ausgestaltet sein.

Vorzugsweise ist die Frontabdeckung und das Bedienfeld als gemeinsamer Touchscreen ausgestaltet, dass bei einer Berührung ein elektronisches Signal erzeugt. Dieses Signal kann verwendet werden, um den Aktuator zu aktivieren.

Vorzugsweise ist der zumindest eine Aktuator ein Piezo-Aktuator oder ein dynamischer Aktuator mit exzentrischer Masse oder ein beweglicher Spulenaktuator oder ein beweglicher Magnetaktuator. Sind mehrere Aktuatoren vorgesehen, so können diese auch verschieden ausgestaltet sein.

Vorzugsweise sind zumindest zwei Aktuatoren vorgesehen, wobei der erste Aktuator ein erstes Aktuatorprinzip und der zweite Aktuator ein zweites Aktuatorprinzip aufweist, wobei das erste Aktuatorprinzip unterschiedlich zum zweiten Aktuatorprinzip ist. Dadurch kann eine sichere haptische Rückkopplung auch bei Ausfall eines Aktuatorprinzips erzielt werden. Unter Aktuatorprinzip werden die auf verschiedenen Prinzipien arbeitenden Aktuatoren verstanden.

Die Aufgabe wird ferner gelöst durch ein Fahrzeug mit einer wie oben beschriebenen Bedieneinheit. Die Bedieneinheit ist vorzugsweise für ein Gerät, beispielsweise eine Fahrzeugkomponente, insbesondere für eine Mensch-Maschinen-Schnittstelle vorgesehen. Vorzugsweise wird die Bedieneinheit als Touchdisplay mit Frontabdeckung mit Bedienfeld, bzw. mit Touchscreen in Fahrzeugen eingesetzt. Die Frontabdeckung / der Touchscreen kann dabei über ein Federsystem am Gehäuse elastisch befestigt sein. Zur Erzeugung des haptischen Feedbacks wird nun die Frontabdeckung mit Bedienfeld, bzw. das Touchscreen mittels des zumindest einen Aktuators um einen bestimmten Weg aus seiner Ruhelage ausgelenkt.

Durch die Erfindung ist es nun möglich, eine Bedieneinheit in einem Fahrzeug anzugeben, welche über zumindest einen Aktuator verfügt, der eine geringe Abmessung bei hoher erzielter haptischer Rückkopplung aufweist. Ferner weist die Bedieneinheit eine geringe Eigenakustik sowie einen geringeren Gesamtaufbau auf. Die oder der Aktuator benötigt durch seine Anordnung eine geringere Leistung und/oder Kraft zur Erzielung einer hohen haptischen Rückkopplung.

Weitere Merkmale, Eigenschaften und Vorteile der vorliegenden Erfindung ergeben sich aus der nachfolgenden Beschreibung unter Bezugnahme auf die beiliegenden Figuren. Darin zeigen schematisch:
FIG 1: ein Fahrzeug mit einer erfindungsgemäßen Bedieneinheit,
FIG 2: ein restriktiver Touchscreen,
FIG 3: eine erste Ausgestaltung des Gehäuses der Erfindung,
FIG 4: eine erste Ausgestaltung der Erfindung,
FIG 5: eine weitere detaillierte Ausgestaltung der Erfindung,
FIG 6: eine weitere detaillierte Ausgestaltung der Erfindung,
FIG 7: eine weitere detaillierte Ausgestaltung der Erfindung.

Obwohl die Erfindung im Detail durch die bevorzugten Ausführungsbeispiele näher illustriert und beschrieben wurde, ist die Erfindung nicht durch die offenbarten Beispiele eingeschränkt. Variationen hiervon können vom Fachmann abgeleitet werden, ohne den Schutzumfang der Erfindung, wie er durch die nachfolgenden Patentansprüche definiert wird, zu verlassen.

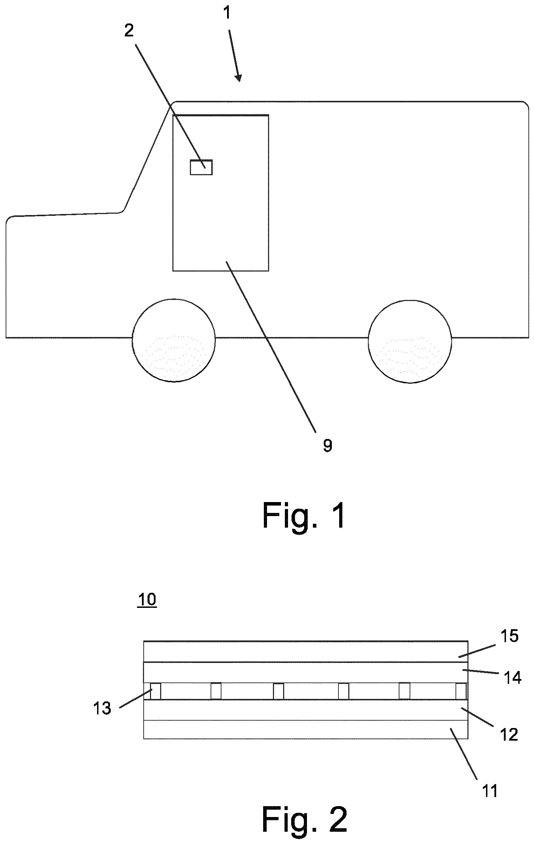

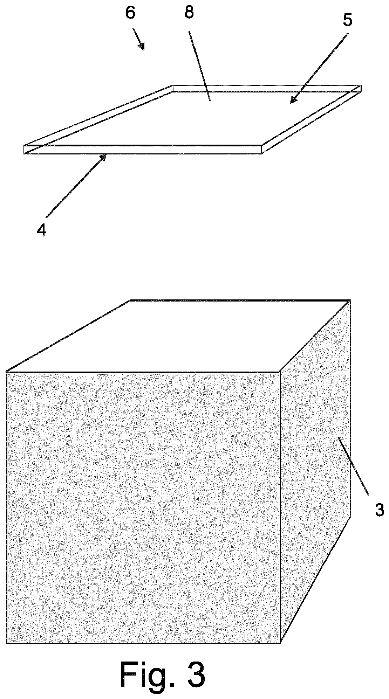

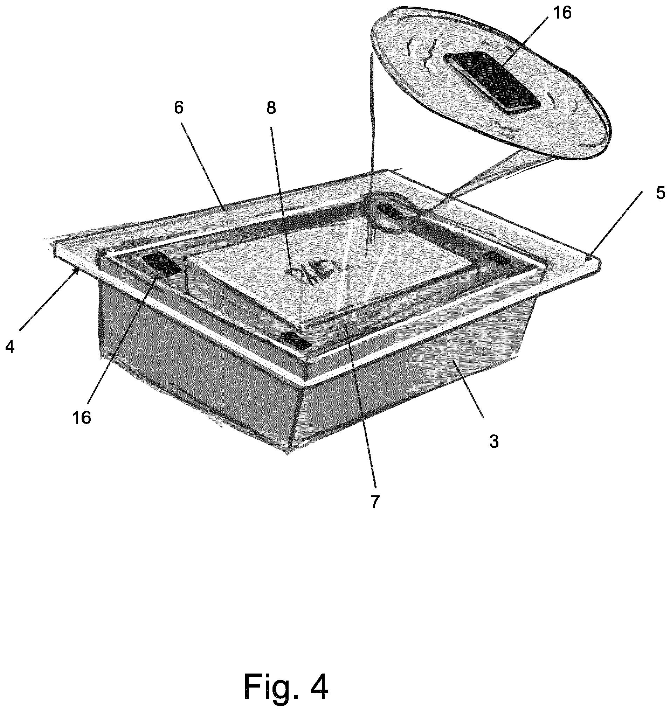

FIG 1 zeigt ein Fahrzeug 1 mit einer erfindungsgemäßen Bedieneinheit 2. Die Bedieneinheit 2 ist vorzugsweise im Cockpit des Fahrzeugs 1 installiert und Bestandteil eines Fahrerassistenzsystems 9. Die Bedieneinheit 2 weist ein Bedienelement 7 (Fig 4), beispielsweise ein Displaymodul auf, welches zur optischen Anzeige und Bedienung von veränderlichen Informationen ausgebildet ist. Die Bedieneinheit 2 weist ein Gehäuse 3 (FIG 3) auf. Das Bedienelement 7 (FIG 4) wird in dieses Gehäuse 3 (FIG 4) so eingebracht, so dass erzeugte Informationen vom Benutzer gesehen werden können. Ferner ist auf dem Bedienelement 7 (FIG 4), beispielsweise ein Displaymodul, eine Frontabdeckung 6 (FIG 3) angeordnet. Die Frontabdeckung 6 (FIG 3) weist eine Rückseite 4 (FIG 3), welche zum Gehäuse 3 (FIG 3) zeigt und eine Vorderseite 5, welche der Rückseite 4 (FIG 3) gegenüberliegt auf. Die Frontabdeckung 6 (FIG 3) weist das Bedienfeld 8 (FIG 4), beispielsweise ein Touchpanel auf, welches vorzugsweise als zur interaktiven Mensch-Maschine Schnittstelle ausgebildet ist.

Das Bedienfeld 8 (FIG 4) ist als transparentes berührungsempfindliches Bedienfeld 8 (FIG 4) ausgestaltet.

Die Frontabdeckung 6 (FIG 3) umfasst somit das transparente berührungsempfindliche Bedienfeld 8 (FIG 4) zur Bedienung des Bedienelementes 7 (FIG 4). Die Frontabdeckung 6 (FIG 3) und das Bedienfeld 8 (FIG 4) kann als gemeinsamer berührungsempfindlicher Touchscreen 10 (FIG 2) ausgestaltet sein.

Ein solcher Touchscreen 10 (FIG 2) ist beispielsweise in FIG 2 gezeigt. Der Touchscreen 10 ist beispielsweise als resistiver Touchscreen 10 ausgestaltet. Resistive Touchscreens 10 sind vielseitig einsetzbar und preiswert und können mit verschiedenen Medien bedient werden. Ein resistiver Touchscreen 10 umfasst eine Glasscheibe 11. Auf die Glasscheibe 11 wird eine transparente, leitende, erste ITO (Indiumzinnoxid)-Schicht 12 angeordnet. Auf der ersten ITO (Indiumzinnoxid)-Schicht 12 ist durch Distanzhalter 13 getrennt eine transparente, leitende, zweite ITO (Indiumzinnoxid)-Schicht 14 angeordnet. Die zweite ITO (Indiumzinnoxid) -Schicht 14 ist mit einer flexiblen, widerstandsfähigen hartbeschichteten Außenmembran 15 versehen.

FIG 3 zeigt ein Gehäuse 3 mit Frontabdeckung 6 der Erfindung. Die Frontabdeckung 6 weist ein Bedienfeld 8 auf. Die Frontabdeckung 6 kann als Touchscreen 10 (FIG 2) ausgestaltet sein. Die Frontabdeckung 6 weist eine Rückseite 4 und eine Vorderseite 5 auf.

Auf der Rückseite 4 sind Aktuatoren 16 (FIG 4) angeordnet.

FIG 4 zeigt eine Ausgestaltung der Erfindung im Detail. Die Rückseite 4 weist Aktuatoren 16 auf. Diese sind auf der Rückseite 4 der Frontabdeckung 6 angeordnet.

Vorzugsweise sind diese außerhalb des transparenten Bedienfeldes 8 angeordnet.

Ferner weist die Frontabdeckung 6 zumindest vier Umfangsseiten auf und zumindest vorzugsweise vier Aktuatoren 16 auf, welche außerhalb des transparenten berührungsempfindlichen Bedienfeldes 8 an jeder Umfangsseite angeordnet sind. Dadurch kann eine gleichmäßige haptische Rückkopplung erfolgen.

Die Anzahl der Aktuatoren 16 kann je nach geometrischer Abmessung der verwendeten Frontabdeckung 6 variieren. Vorzugsweise sind die Aktuatoren 16 symmetrisch auf der Rückseite 4 der Frontabdeckung 6 verteilt. Dadurch kann eine gleichmäßige haptische Rückkopplung erzielt werden.

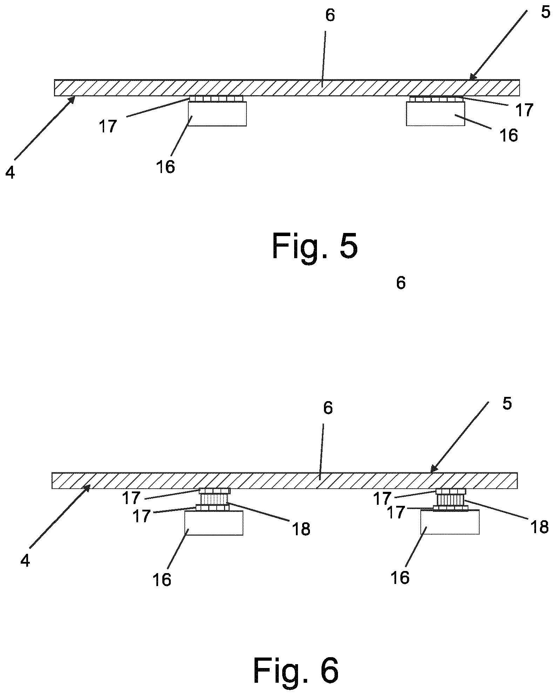

Das Befestigen der Aktuatoren 16 erfolgt über einen Klebeprozess. Dies kann eine Klebeschicht 17 (FIG 5) sein. Dadurch können die Aktuatoren 16 einfach und elastisch an der Rückseite 4 angeordnet werden.

Die Aktuatoren 16 können als Piezo-Aktuatoren ausgestaltet sein. Piezo-Aktuatoren wandeln elektrische Energie direkt in mechanische Energie um und ermöglichen Bewegungen im Sub-Nanometerbereich. Piezo-Aktuatoren sind Bauteile, welche durch Anlegen einer elektrischen Spannung eine mechanische Bewegung ausführen. Piezo-Aktuatoren sind dabei bevorzugt so konfiguriert, dass sie vibrieren, wenn ein Strom durch sie fließt. Piezo-Aktuatoren können ferner über ein SMT-Pad (SMT = Conductive Soft Surface Mounted Technology) mit einer Leiterplatte (PWB) verbunden sein, die eine elektrische Verbindung zwischen den einzelnen Piezo-Aktuator und der Leiterplatte herstellen.

Auch können die Aktuatoren 16 als dynamische Aktuatoren mit exzentrischer Masse, d.h. mit einem Motor, der eine exzentrisch gelagerte Masse dreht (Exzentertechnik) ausgestaltet sein. Für die Exzentertechnik kommt in der Regel ein Gleichstrommotor mit einfacher Ein/Aus-Schaltung zum Einsatz. Durch den Einsatz der Modulation von Frequenz und Amplitude, der Veränderung der Wellenform sowie der Veränderung der Dauer lässt sich eine breite Palette von taktilen Effekten erzeugen.

Ferner können die Aktuatoren 16 als bewegliche Spulenaktuatoren ausgestaltet sein. Diese können elektromagnetische Spulen, Transformatoren, Motoren, Schwingspulen, Drehspulen usw. sein.

Auch können die Aktuatoren 16 als bewegliche Magnetaktuatoren ausgestaltet sein.

Sind mehrere Aktuatoren 16 vorhanden, so können auch verschiedene Aktuatorenprinzipien verwendet werden.

Durch die Haptik können reichhaltige nichtakustische und nicht optische Kommunikationshinweise gegeben werden. Die haptische Benutzerschnittstelle bietet somit eine multimodale Rückmeldung: vorzugsweise akustisch, visuell und taktil.

FIG 5 zeigt schematisch eine weitere erfindungsgemäße Ausgestaltung. Die Aktuatoren 16 sind mittels einer Klebeschicht 17 an der Rückseite 4 der Frontabdeckung 6 verklebt. Die Aktuatoren 16 können mittels Leiterbahnen oder Koaxialkabeln an eine Spannungsquelle angeschlossen sein.

Die Aktuatoren 16 sind außerhalb des transparenten Bedienfeldes 8 (FIG 4) auf der Rückseite 4 der Frontabdeckung 6 angeordnet.

Durch die Anordnung auf der Rückseite 4 der Frontabdeckung 6 werden die Aktuatoren 16 derart in das Gehäuse 3 (FIG 3) integriert, dass nur die Frontabdeckung 6, beispielsweise das Touchscreen 10 (FIG 2), angeregt wird.

Im Gegensatz zur Anregung der kompletten Bedieneinheit 2 (FIG 1) wird daher nur eine geringere Masse in Form lediglich der Frontabdeckung 6 angeregt. Dadurch können Aktuatoren 16 mit geringerer Leistung und geringeren Abmessungen verwendet werden, um dieselbe Wirkung zu erzielen. Dadurch können Kosten gespart werden. Ferner ist nur eine geringere Kraftübertragung zur Erzielung derselben Wirkung erforderlich. Dies wiederum wird vom Benutzer als leiser empfunden, das heißt, dass die Eigenakustik der Bedieneinheit 2 (FIG 1) geringer ist. Zudem ist ein geringerer Bauraumbedarf erforderlich.

FIG 6 zeigt eine weitere Ausgestaltung der Erfindung. Hier sind zwischen dem Aktuatoren 16 und der Frontabdeckung 6 jeweils noch ein Abstandshalter 18 angeordnet. Dieser kann wesentlich kleiner als beispielsweise der jeweilige Aktuator 16 ausgestaltet sein. Durch solche Abstandshalter 18 kann die Vibrationsfrequenz mit der die Aktuatoren 16 die Frontabdeckung 6 anregen, beeinflusst werden. Die von den Aktuatoren 16 erzeugte Kraft/Frequenz kann somit gezielter d.h. gerichteter in die Frontabdeckung 6 eingebracht werden. Je nach Ausgestaltung der Abstandshalter 18 können verschiedene Frequenzen erzielt werden. Die Abstandshalter 18 können ebenfalls zwischen den Aktuatoren 16 und der Frontabdeckung 6 mittels einer Klebeschicht 17 geklebt werden.

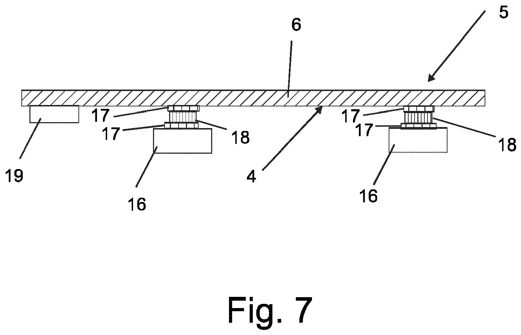

FIG 7 zeigt eine weitere Ausgestaltung der Erfindung. Hier ist ein Sensor 19 zusätzlich zu den Aktuatoren 16 vorgesehen. Die Betätigung des Bedienfeldes 8 (FIG 4) kann durch den Sensor 19 erkannt werden. Daraufhin werden über eine nicht gezeigte Auswerteeinheit Signale ausgewertet, welche von dem Sensor 19 übermittelt werden. Über eine nicht gezeigte Ansteuereinheit werden anschließend Ansteuersignale an den/die Aktuatoren 16 gesendet, mit denen der/die Aktuatoren 16 gesteuert wird. Der Sensor 19 kann als Weg- oder Kraftsensor realisiert sein.

Alternativ kann der Sensor 19 auch das Bedienfeld 8 (FIG 4) sein, welches beispielsweise als kapazitives Touchpanel ausgestaltet ist. Ferner kann die Frontabdeckung 6 auch als Touchscreen 10 (FIG 2) ausgestaltet sein.

Durch die Erfindung wird zusätzlicher Bauraum für Aktuatoren 16 vermieden.

Ferner wird vermieden, dass die gesamte Bedieneinheit 2 (FIG 1) beispielsweise inklusive eines Beleuchtungsmoduls haptisch angeregt werden muss.

Durch die Anregung lediglich der Frontabdeckung 6 wird an anzuregender Masse eingespart. Dadurch können die Aktuatoren 16 wesentlich kleiner und mit weniger Leistung ausgeführt werden. Die Anregung geringerer Masse hat den Vorteil, dass geringere Leistungen von Aktuatoren 16 benötigt werden. Dies spart zusätzlich Bauraum und Kosten ein. Dadurch ist eine geringere Kraftübertragung an die Frontabdeckung 6 für eine haptische Rückkopplung möglich. Dadurch ergibt sich ebenfalls eine geringere Eigenakustik, welche beispielsweise vom Benutzer als leiser empfunden wird.

## Patentansprüche

1. Bedieneinheit (2) für ein Fahrzeug (1) mit einem Gehäuse (3) und einem Bedienelement (7), wobei das Gehäuse (3) zur Aufnahme des Bedienelements (7) ausgebildet ist,
und mit einer Frontabdeckung (6), welche zumindest teilweise ein transparentes berührungsempfindliches Bedienfeld (8) zur Bedienung des Bedienelements (7) aufweist,
wobei die Frontabdeckung (6) eine zum Gehäuse (3) weisende Rückseite (4) aufweist und wobei die Frontabdeckung (6) elastisch im Gehäuse (3) gelagert ist
und mit zumindest einem Aktuator (16),
wobei der zumindest eine Aktuator (16) an der Rückseite (4) der Frontabdeckung (6) zur Erzeugung einer haptischen Anregung der Frontabdeckung (6) angeordnet ist,
**dadurch gekennzeichnet, dass**
der zumindest eine Aktuator (16) an der Rückseite (4) der Frontabdeckung (6) mittels einer Klebeschicht (17) elastisch befestigt ist.

2. Bedieneinheit (2) nach Anspruch 1, **dadurch gekennzeichnet, dass** der zumindest eine Aktuator (16) außerhalb des transparenten berührungsempfindlichen Bedienfeldes (8) an der Rückseite (4) der Frontabdeckung (6) angeordnet ist.

3. Bedieneinheit (2) nach Anspruch 2, **dadurch gekennzeichnet, dass** mehrere Aktuatoren (16) außerhalb des transparenten berührungsempfindlichen Bedienfeldes (8) an der Rückseite (4) der Frontabdeckung (6) angeordnet sind.

4. Bedieneinheit (2) nach Anspruch 3, **dadurch gekennzeichnet, dass** die Frontabdeckung (6) zumindest vier Umfangsseiten aufweist und zumindest vier Aktuatoren (16) vorgesehen sind, welche außerhalb des transparenten berührungsempfindlichen Bedienfeldes (8) an der Rückseite (4) der Frontabdeckung (6) an jeder Umfangsseite angeordnet sind.

5. Bedieneinheit (2) nach einem der vorhergehenden Ansprüche, **dadurch gekennzeichnet, dass**
der zumindest eine Aktuator (16) unmittelbar an der Rückseite (4) der Frontabdeckung (6) angeordnet ist.

6. Bedieneinheit (2) nach einem der vorhergehenden Ansprüche 1 bis 4,
**dadurch gekennzeichnet, dass**
der zumindest eine Aktuator (16) mittelbar an der Rückseite (4) der Frontabdeckung (6) angeordnet ist.

7. Bedieneinheit (2) nach Anspruch 6, **dadurch gekennzeichnet, dass** ein Abstandshalter (18) vorgesehen ist, welcher an der Rückseite (4) der Frontabdeckung (6) angeordnet ist und wobei der zumindest eine Aktuator (16) an dem Abstandshalter (18) angeordnet ist.

8. Bedieneinheit (2) nach Anspruch 7, **dadurch gekennzeichnet, dass** der Abstandshalter (18) eine Abstandshalterbreite und eine Abstandshalterlänge und der zumindest eine Aktuator (16) eine Aktuatorlänge und eine Aktuatorbreite aufweist, wobei die Abstandshalterbreite kleiner als die Aktuatorbreite und/oder die Abstandshalterlänge kleiner als die Aktuatorlänge ausgebildet ist.

9. Bedieneinheit (2) nach einem der vorhergehenden Ansprüche 7 oder 8,
**dadurch gekennzeichnet, dass**
der zumindest eine Aktuator (16) an dem Abstandshalter (18) und der Abstandshalter (18) an der Frontabdeckung (6) mittels einer Klebeschicht (17) geklebt ist.

10. Bedieneinheit (2) nach einem der vorhergehenden Ansprüche, **dadurch gekennzeichnet, dass**
ein Sensor (19) zur Erkennung einer Bedienung des Bedienfeldes (8) vorgesehen ist und der zumindest eine Aktuator (16) zur mechanischen Anregung der Frontabdeckung (6) bei Erkennung einer Bedienung durch den Sensor (19) ausgestaltet ist.

11. Bedieneinheit (2) nach einem der vorhergehenden Ansprüche, **dadurch gekennzeichnet, dass**
die Frontabdeckung (6) und das Bedienfeld (8) als gemeinsamer Touchscreen (10) ausgestaltet ist.

12. Bedieneinheit (2) nach einem der vorhergehenden Ansprüche, **dadurch gekennzeichnet, dass**
der zumindest eine Aktuator (16) ein Piezo-Aktuator, ein dynamischer Aktuator mit exzentrischer Masse oder ein beweglicher Spulenaktuator oder ein beweglicher Magnetaktuator ist.

13. Bedieneinheit (2) nach einem der vorhergehenden Ansprüche, **dadurch gekennzeichnet, dass**
zumindest zwei Aktuatoren (16) vorgesehen sind, wobei der erste Aktuator (16) ein erstes Aktuatorprinzip und der zweite Aktuator (16) ein zweites Aktuatorprinzip aufweist, wobei das erste Aktuatorprinzip unterschiedlich zum zweiten Aktuatorprinzip ist.

14. Fahrzeug (1) mit einer Bedieneinrichtung (2) nach einem der vorhergehenden Ansprüche.

## Claims

1. Operator control unit (2) for a vehicle (1), having a housing (3) and an operator control element (7), wherein the housing (3) is designed to accommodate the operator control element (7),
and having a front cover (6) which has, at least in part, a transparent, touch-sensitive operator control panel (8) for operating the operator control element (7), wherein the front cover (6) has a rear side (4) facing the housing (3), and wherein the front cover (6) is mounted elastically in the housing (3),
and having at least one actuator (16),
wherein the at least one actuator (16) is arranged on the rear side (4) of the front cover (6) in order to generate haptic excitation of the front cover (6),
**characterized in that**
the at least one actuator (16) is elastically fastened to the rear side (4) of the front cover (6) by means of an adhesive layer (17).

2. Operator control unit (2) according to Claim 1, **characterized in that** the at least one actuator (16) is arranged outside the transparent, touch-sensitive operator control panel (8) on the rear side (4) of the front cover (6).

3. Operator control unit (2) according to Claim 2, **characterized in that** a plurality of actuators (16) are arranged outside the transparent, touch-sensitive operator control panel (8) on the rear side (4) of the front cover (6).

4. Operator control unit (2) according to Claim 3, **characterized in that** the front cover (6) has at least four peripheral sides and at least four actuators (16) are provided, the actuators being arranged outside the transparent, touch-sensitive operator control panel (8) on the rear side (4) of the front cover (6) on each peripheral side.

5. Operator control unit (2) according to any of the preceding claims,
**characterized in that**
the at least one actuator (16) is arranged directly on the rear side (4) of the front cover (6).

6. Operator control unit (2) according to any of the preceding Claims 1 to 4,
**characterized in that**
the at least one actuator (16) is arranged indirectly on the rear side (4) of the front cover (6).

7. Operator control unit (2) according to Claim 6, **characterized in that** a spacer (18) is provided, which is arranged on the rear side (4) of the front cover (6) and wherein the at least one actuator (16) is arranged on the spacer (18).

8. Operator control unit (2) according to Claim 7, **characterized in that** the spacer (18) has a spacer width and a spacer length and the at least one actuator (16) has an actuator length and an actuator width, wherein the spacer width is less than the actuator width and/or the spacer length is less than the actuator length.

9. Operator control unit (2) according to either of the preceding Claims 7 and 8, **characterized in that**
the at least one actuator (16) is adhesively bonded to the spacer (18) by means of an adhesive layer (17) and the spacer (18) is adhesively bonded to the front cover (6) by means of an adhesive layer (17).

10. Operator control unit (2) according to any of the preceding claims,
**characterized in that**
a sensor (19) is provided for identifying operation of the operator control panel (8) and the at least one actuator (16) is designed to mechanically excite the front cover (6) when operation is identified by the sensor (19).

11. Operator control unit (2) according to any of the preceding claims,
**characterized in that**
the front cover (6) and the operator control panel (8) are configured as a common touchscreen (10).

12. Operator control unit (2) according to any of the preceding claims,
**characterized in that**
the at least one actuator (16) is a piezoactuator, a dynamic actuator with an eccentric mass or a movable coil actuator or a movable magnet actuator.

13. Operator control unit (2) according to any of the preceding claims,
**characterized in that**
at least two actuators (16) are provided, wherein the first actuator (16) has a first actuator principle and the second actuator (16) has a second actuator principle, wherein the first actuator principle is different from the second actuator principle.

14. Vehicle (1) having an operator control device (2) according to any of the preceding claims.

## Revendications

1. Unité de commande (2) pour un véhicule (1), comprenant un boîtier (3) et un élément de commande (7), le boîtier (3) étant réalisé pour recevoir l'élément de commande (7),
et comprenant un cache avant (6) qui présente au moins en partie un panneau de commande (8) tactile transparent pour commander l'élément de commande (7),
dans lequel le cache avant (6) présente une face arrière (4) orientée vers le boîtier (3), et dans lequel le cache avant (6) est monté de manière élastique dans le boîtier (3),
et comprenant au moins un actionneur (16),
dans lequel ledit au moins un actionneur (16) est disposé sur la face arrière (4) du cache avant (6) pour générer une excitation haptique du cache avant (6),
**caractérisé en ce que**
ledit au moins un actionneur (16) est fixé de manière élastique à la face arrière (4) du cache avant (6) au moyen d'une couche adhésive (17).

2. Unité de commande (2) selon la revendication 1, **caractérisée en ce que** ledit au moins un actionneur (16) est disposé à l'extérieur du panneau de commande (8) tactile transparent sur la face arrière (4) du cache avant (6).

3. Unité de commande (2) selon la revendication 2, **caractérisée en ce que** plusieurs actionneurs (16) sont disposés à l'extérieur du panneau de commande (8) tactile transparent sur la face arrière (4) du cache avant (6).

4. Unité de commande (2) selon la revendication 3, **caractérisée en ce que** le cache avant (6) présente au moins quatre faces périphériques et au moins quatre actionneurs (16) sont prévus qui sont disposés à l'extérieur du panneau de commande (8) tactile transparent sur la face arrière (4) du cache avant (6) sur chaque face périphérique.

5. Unité de commande (2) selon l'une quelconque des revendications précédentes, **caractérisée en ce que**
ledit au moins un actionneur (16) est disposé directement sur la face arrière (4) du cache avant (6).

6. Unité de commande (2) selon l'une quelconque des revendications précédentes 1 à 4, **caractérisée en ce que**
ledit au moins un actionneur (16) est disposé directement sur la face arrière (4) du cache avant (6).

7. Unité de commande (2) selon la revendication 6, **caractérisée en ce que** qu'un écarteur (18) est prévu qui est disposé sur la face arrière (4) du cache avant (6), et dans lequel ledit au moins un actionneur (16) est disposé sur l'écarteur (18).

8. Unité de commande (2) selon la revendication 7, **caractérisée en ce que** l'écarteur (18) présente une largeur d'écarteur et une longueur d'écarteur, et ledit au moins un actionneur (16) présente une longueur d'actionneur et une largeur d'actionneur, dans lequel la largeur d'écarteur est réalisée pour être inférieure à la largeur d'actionneur et/ou la longueur d'écarteur est réalisée pour être inférieure à la longueur d'actionneur.

9. Unité de commande (2) selon l'une quelconque des revendications précédentes 7 ou 8, **caractérisée en ce que**
ledit au moins un actionneur (16) est collé sur l'écarteur (18), et l'écarteur (18) est collé sur le cache avant (6), au moyen d'une couche adhésive (17).

10. Unité de commande (2) selon l'une quelconque des revendications précédentes, **caractérisée en ce que**
qu'un capteur (19) pour identifier une commande du panneau de commande (8) est prévu, et ledit au moins un actionneur (16) est configuré pour l'excitation mécanique du cache avant (6) lorsqu'une commande est identifiée par le capteur (19).

11. Unité de commande (2) selon l'une quelconque des revendications précédentes, **caractérisée en ce que**
le cache avant (6) et le panneau de commande (8) sont configurés sous la forme d'un écran tactile (10) commun.

12. Unité de commande (2) selon l'une quelconque des revendications précédentes, **caractérisée en ce que**
ledit au moins un actionneur (16) est un actionneur piézoélectrique, un actionneur dynamique à masse excentrique ou un actionneur à bobine mobile ou un actionneur à aimant mobile.

13. Unité de commande (2) selon l'une quelconque des revendications précédentes, **caractérisée en ce que**
qu'au moins deux actionneurs (16) sont prévus, dans lequel le premier actionneur (16) présente un premier principe d'actionneur et le deuxième actionneur (16) présente un deuxième principe d'actionneur, le premier principe d'actionneur étant différent du deuxième principe d'actionneur.

14. Véhicule (1) comprenant un dispositif de commande (2) selon l'une quelconque des revendications précédentes.
